# EUROPEAN PATENT SPECIFICATION

(11) **EP 0 686 599 B1**
(45) Date of publication and mention of the grant of the patent: **23.12.1998**
(21) Application number: 95108679.2
(22) Date of filing: 06.06.1995
(51) Int. Cl.: C01F 7/06

(54) **Process for improving the settling rate and/or clarity of feeds in the bayer process**
Verfahren zur Verbesserung der Absetzgeschwindigkeit und/oder der Klarheit von Zuflüssen in dem Bayer-Verfahren
Procédé pour améliorer la vitesse de dépôt et/ou la clarté des alimentations dans le procédé Bayer

(30) Priority: 06.06.1994 US 254339
(43) Date of publication of application: 13.12.1995
(73) Proprietor: CYTEC TECHNOLOGY CORP., Wilmington, Delaware 19801 (US)
(72) Inventor: Loucks, Kevin J., Portland, Texas 78374 (US); Cole, Robert W., Portland, Texas 78374 (US)
(74) Representative: Allam, Peter Clerk

(56) References cited:
- GB-A- 2 112 366
- US-A- 4 767 540

## Description

The present invention relates to a process for improving the settling rate and/or clarity of feeds to the settler and/or initial stages of the washer train in the Bayer process.

The almost universally used process for the manufacture of alumina is the Bayer Process. In a typical commercial Bayer Process, raw bauxite is pulverized to a finely divided state. The pulverized ore is then fed to a slurry mixer where a 50% solids slurry is prepared using spent liquor and added caustic. This bauxite slurry is then diluted and sent through a series of digesters where, at about 148 to 427°C (about 300-800°F.) and 6.9 to 138 bar (100-2000 p.s.i.), 98% of the total available alumina is extracted from the ore which may contain both trihydrate and monohydrate forms of alumina. The effluent from the digesters passes through a series of flash tanks wherein heat and condensate are recovered as the digested slurry is cooled to about 110°C (about 230°F.) and brought to atmospheric pressure. The aluminate liquor leaving the flashing operation contains about 1-20% solids, which consist of the insoluble residues that remain after reaction between the bauxite ore and basic material used to digest the ore and the insoluble components which precipitate during digestion. The coarser solid particles are generally removed with a "sand trap" cyclone. To separate the finer solid particles from the liquor, the slurry is normally fed to the center well of a mud settler (also called a decanter, a residue thickener or a raking thickener) where it is treated with a flocculant such as a polyacrylate polymer. As the mud settles, clarified sodium aluminate solution, referred to as "green" or "pregnant" liquor, overflows a weir at the top of the mud settling tank and is passed to subsequent processing steps. The settled solids ("red mud") are withdrawn from the bottom of the mud settler and passed through a countercurrent washing circuit (also called "the washer train") for further recovery of sodium aluminate and soda. Aluminate liquor overflowing the settler still contains typically 50 to 200 mg of suspended solids per liter. This liquor is then generally further clarified by filtration to give a filtrate with 10 mg. suspended solids per liter of liquor.

Alumina, in relatively pure form, is then precipitated from the filtrate as alumina trihydrate crystals. The remaining liquid phase or spent liquor is returned to the initial digestion step and employed as a digestant of additional ore after being reconstituted with additional caustic. After passage through the filtration step, the level of suspended solids should be sufficiently low to provide an alumina product from the precipitation step which meets all of the industry standards.

The aforementioned insoluble components are preferably separated at a relatively fast rate so as to make the overall Bayer Process efficient. This is generally accomplished in large settlers, decanters, residue thickeners etc, as mentioned above. The separation itself should be clean and complete with but minimal amounts of residue remaining as a dispersed phase in the solubilized aluminate liquor. The settlers, decanters, residue (or raking) thickeners (all of which are hereinafter referred to as "settler(s)" may exceed 49 m in diameter. Some are of a multideck configuration, however, single-deck units are almost exclusively used at the present time. In operation, the settler(s) feed liquor is fed at the center of the settler(s) and clarified solution overflows at the perimeter. The settler feed liquor is added to the settler(s) via a feedpipe which exits into a feedwell centrally located at the top of the settler. As the solution flows radially across the settler, the horizontal and vertical viscosities become very low and the solids i.e. red mud, sink to the bottom because the specific gravity thereof is higher than the solution. The faster the settling rate, the more material which can be processed in the settler(s). The solution overflowing the settler(s) contains very few solids whereas the underflow can contain up to 35% solids. A rotating mechanism with plows mounted at an angle, slowly moves the settled solids across the bottom of the settler(s) to a discharge cone usually located in the bottom center thereof. The fine solids of the settler feed liquor settle very slowly unless accelerated by the addition of flocculants which act to bind the fine solids into flocs that often are several millimeters in diameter. The ratio of mass to drag forces is thereby increased causing the flocs to settle more rapidly. The settled solids from the settler(s) are treated in the counter-current washing circuit (washer train) discussed above, to further remove the red mud therefrom by washing. Decantation systems are employed for this purpose using washing thickeners similar in design to the settler(s). The washing operation is accomplished in as many as ten (10) stages, the solids moving counter-current to the wash stream to recover solubles and the overflow being recycled back from each stage of the washer train to its predecessor. Flocculant addition to the stages of the washer train increases the solids separation, it being generally known to utilize different flocculants in the earlier stages from those used in the latter stages, see, for example, US-A-4,678,585.

The efficient removal of suspended solids from the Bayer Process settler(s) feed liquor and the initial stages of the washer train, i.e. the first separation stages to which the red mud slurry from the last settler are introduced, has been a major problem for many years.

Among the methods of overcoming the above problems and materially speeding up separation of suspended solids from Bayer Process streams as well as effecting a cleaner separation of the constituents, is that disclosed in US-A-4767540. In this patent there is disclosed the addition of a water-soluble polymer containing pendant hydroxamic acid or salt groups to Bayer Process streams, alone or in conjunction with an anionic flocculant. It is broadly stated that the polymer containing hydroxamic acid groups may be added into the Bayer Process caustic aluminate process stream alone, subsequent to, followed by or in association with the anionic flocculant, e.g. a conventional polyacrylate polymer. In each of the very numerous working examples given either the polymer containing pendant hydroxamic acid groups or salts is added by itself, or where used in conjunction with an anionic flocculant, the anionic material always follows the addition of the polymer containing pendant hydroxamic acid or salt groups. The disclosed treatment is shown to reduce levels of suspended solids in the process stream as compared to then existing state-of-the-art processes.

It has now been found to be unexpectedly advantageous, when treating the feed to the primary settler(s) of the Bayer Process and/or the initial stages of the washer train, to contact said feed liquor first with an anionic, preferably polyacrylate flocculant and then with the polymer containing the pendant hydroxamic acid groups and/or hydroxamic acid salt groups.

This sequence of addition of the two additives results in either an increased settling rate or a greater clarification of the feed stream, or both. More particularly, according to the present invention, there is provided a process for improving the settling rate and/or clarity of the settler feed liquor and/or the initial stages of the washer train in the Bayer Process whereby there is admixed therewith, in sequential order, first an anionic flocculant and then a water-soluble polymer containing pendant hydroxamic acid or salt groups, and removing the resultant settled suspended solids.

Preferably, the anionic flocculant is added to the settler(s) feed lines. Even more preferably, the water-soluble polymer is added to the feed well of the settler(s). Most preferably, the anionic polymer is added to the settler(s) feed lines and the water-soluble, hydroxamated polymer is added to the feed well of the settler(s).

The anionic flocculant used in the process of the present invention is preferably a homopolymer of an acrylic acid or a copolymer of an acrylic acid containing at least 80 molar percent of the acrylic acid or the alkali metal, alkaline earth metal or ammonium salt thereof, or a combination of any of the foregoing. Examples of acrylic acids which may be used include acrylic acid, methacrylic acid etc. Copolymers and terpolymers of said acrylic acids with copolymerizable monoethylenically unsaturated comonomers such as acrylamide, methacrylamide etc. may be used. The amount of anionic flocculant normally added may range from 4.5g to 18.2 kg (0.01 to 40 lbs.) of flocculant per 907 kg (ton) of solids to be settled. Preferably, the anionic flocculant is a homopolymer or copolymer of an acrylic acid salt.

Both the water-soluble, anionic flocculant and water-soluble, hydroxamated polymer to be employed in the present invention should be sufficiently stable to be effective under the Bayer Process conditions used, e.g., high temperatures and strong caustic conditions, typically, 85 to 107.2°C (185-225°F), and 80-4000g./1. total alkali content (expressed as sodium carbonate equivalent).

Any water-soluble hydroxamic acid or hydroxamic acid salt group-containing polymer may be used in the process of the present invention. The useful polymers can best be exemplified by those containing pendant groups of the Formula (I); 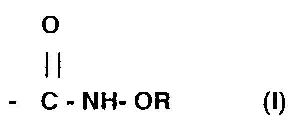 wherein R is hydrogen or a cation. These polymers are well known in the art and can be derived from polymers containing pendant ester, amide, anhydride, nitrile, etc., groups by the reaction thereof with a hydroxylamine or its salt.

Exemplary of the polymers which may be hydroxamated for use in the process of the present invention are acrylic, methyacrylic, crotonic etc., acid ester polymers such as polymers produced from the polymerization of methyl acrylate, ethyl acrylate, t-butyl acrylate, methyl methacrylate, ethyl methacrylate, cyclohexyl methacrylate, dimethyl aminoethyl methacrylate, dimethyl aminoethyl methacrylate, dimethyl aminoethyl acrylate, methyl crotonate, etc.; polymers of maleic anhydride and esters thereof, and the like; nitrile polymers such as those produced from acrylonitrile etc; amide polymers such as those produced from acrylamide, methacrylamide and the like.

Hydroxamated polymers are well known to those skilled in the art and are specifically disclosed as are methods for their production, in the above mentioned US-A-4,767,540. Generally, these hydroxamated polymers may be produced by reacting the polymer containing the pendant reactive group, in solution, with a hydroxylamine or its salt at a temperature ranging from about 50°C to 100°C for several hours. In addition to reaction of hydroxylamine or its salt with a polymer solution, it has been found that a polymer latex may be reacted directly with the hydroxylamine or its salt. The latex may be, e.g., a copolymer of acrylamide and methyl acrylate, a copolymer of acrylic acid and methyl acrylate etc. In these cases, the hydroxylamine or its salt reacts primarily with the ester groups to form hydroxamic acid groups.

Also, it has been found that inverse emulsions made of, for example, aqueous polyacrylamide or acrylamide/acrylic acid copolymers dispersed in oil can be reacted directly with hydroxylamine or its salt to give very high molecular weight polymers containing hydroxamic acid groups, all of which function efficiently in the process of the present invention.

The degree of hydroxamation, i.e., the concentration of Formula I units in the polymers useful herein, may range from about 1 to about 100 mole percent, preferably from about 5 to about 90 mole percent and, most preferably, from about 20 to about 80 mole percent of the polymer.

Suitable hydroxylamine salts include the sulfates, sulfites, phosphates, perchlorates, hydrochlorides, acetates, propionates and the like. The pH of the solution of the polymer to be hydroxamated is adjusted to over about 6.0, preferably over about 10.0, beforehand.

Any water-soluble polymer may be used in the present process which, after hydroxamation, performs to settle suspended solids. Thus, homopolymers, copolymers, terpolymers, etc. of the above exemplified monomers may be used. Suitable comonomers which, by copolymerization, may form, for example, up to about 95 mole percent of the polymers useful herein can include acrylic acid, sodium acrylate, methacrylic acid, maleic anhydride, vinyl acetate, vinyl pyrrolidone, butadiene, styrene as well as others of the above enumerated esters, amides an/or nitriles and the like as is known in the art and is set forth in the above-incorporated patents as long as such copolymers, terpolymers etc., are water-soluble after hydroxamation. The weight average molecular weight of the hydroxamated polymers useful in the process of the present invention range from about 1 x 10⁴ to about 3 x 10⁷.

The anionic flocculants and the water-soluble, hydroxamated polymers used in the present invention are employed by adding them, usually in the form of an aqueous solution, to the settler(s) feed liquor containing solubilized alumina and suspended solids dispersed throughout, and/or the feeds to the initial stages of the washer train, in an amount at least sufficient to settle suspended solids therefrom. Generally, for best results, at least about 0.1 mg, of the hydroxamated polymer, per liter of the settler(s) feed liquor and/or washer train stage feeds should be employed. More preferably, at least 1.0 mg, of the hydroxamated polymer, per liter of the settler(s) feed liquor and/or washer stage feeds should be employed.

It is understood, that higher amounts than those above stated may be employed without departing from the scope of the invention, although generally a point is reached in which addition amounts of anionic flocculant and/or hydroxamated polymer do not improve the separation rate over already achieved maximum rates. Thus, it is uneconomical to use excessive amounts of either additive when this point is reached.

The addition of the anionic flocculant should precede the addition of the water-soluble, hydroxamated polymer by sufficient time such as to enable the anionic flocculant to perform. Thus, for example, if both additives are added to the settler feed liquor before the feed well of the settler, or both are added to the feed well, or both are added after the feed well, or the anionic flocculant is added to the settler feed liquor and the water-soluble, hydroxamated polymer is added to the feed well, or the anionic flocculant is added to the feed-well and the water-soluble, hydroxamated polymer is added after the feed well, there must be sufficient time allowed between the individual additions to enable the anionic flocculant to at least begin to flocculate the suspended solids. The same applies to different addition points of the washer train stages.

The following examples illustrate the invention. All parts are by weight unless otherwise specified.

To a vessel containing a settler feed liquor from a commercial Bayer Process alumina plant are added, as set forth in Table I, below, a 15 mole percent hydroxamated polymer containing 55 mole percent of acrylic acid units and 30 mole percent of acrylamide units and having a weight average molecular weight of about 20 million (identified as A) and a commercially available ammonium polyacrylate flocculant having a number average molecular weight of about 10-15 million (identified as B).

The additives are added in the sequence indicated with mixing between each addition such as to simulate the mixing in the plant of the additives if added to the settler feed pipe (ADD. #1) and the settler feed well (ADD. #2). The results are set forth in Table 1, below.

All additives except starch are made up to 0.1% with 10 gpl caustic in water. The filtration volume is 100 ml. All examples using only polyacrylate flocculant include 2.4 ml/l of starch solution.

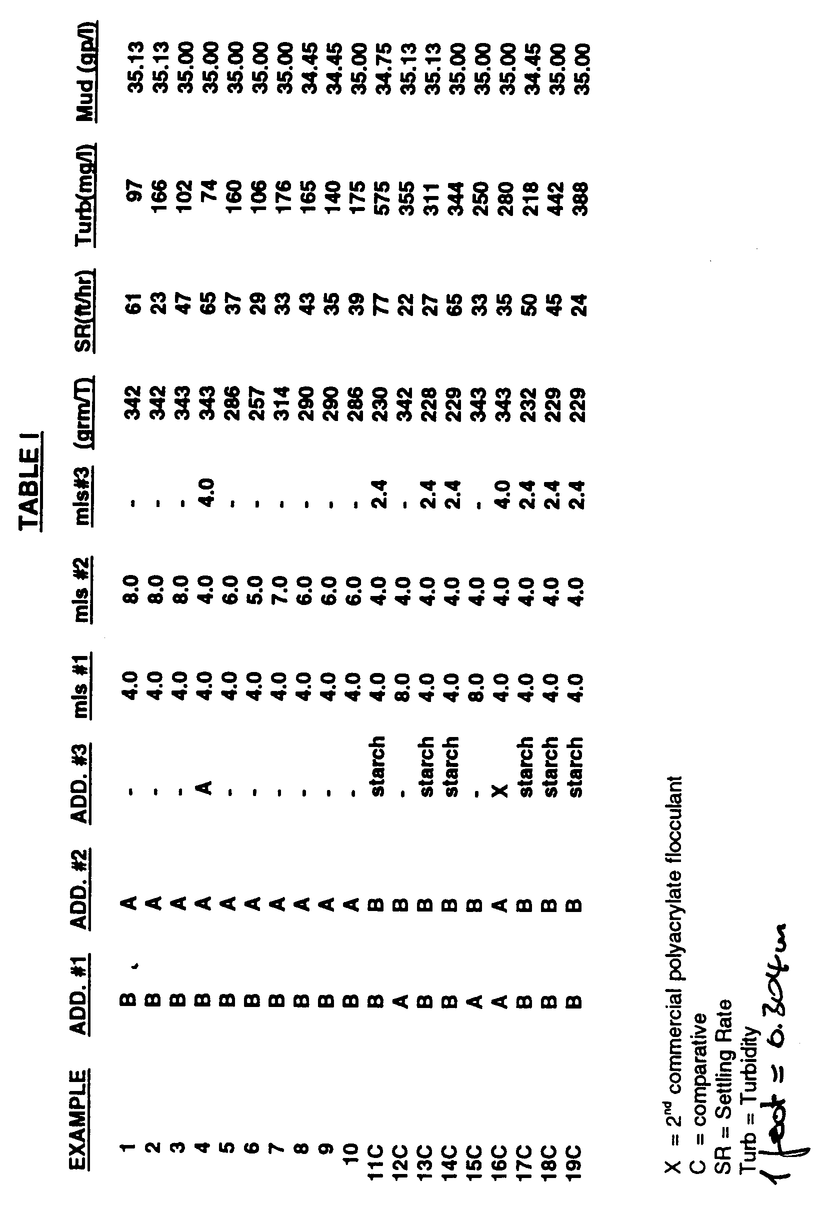

As can be readily appreciated from the data presented in Table I, when the polyacrylate flocculant is used followed by the water-soluble, hydroxamated polymer, a vast improvement in the Settling Rate and Turbidity of the charge liquor is seen.

The testing procedure of Examples 1-19 is again followed. The results are set forth in Table II, below. See Table I for designations.

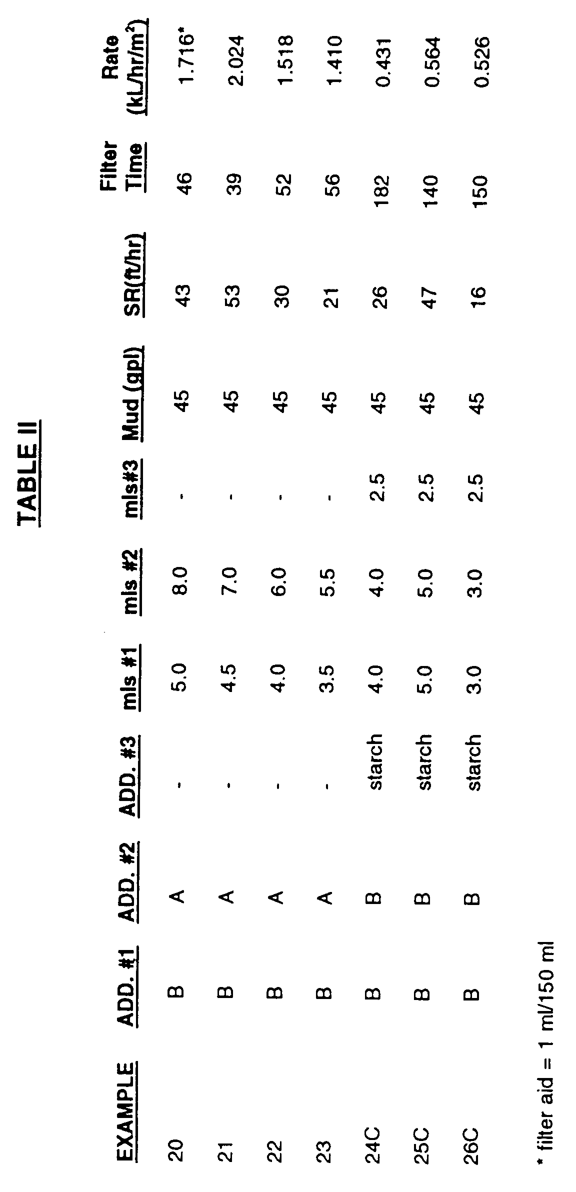

The data of Table II clearly point out the unexpected efficiency of the addition sequence of the anionic flocculant and water-soluble, hydroxamated polymer according to the present invention.

### Examples 27-32

Again following the testing procedure of Examples 1-19, the results set forth in Table III, below, are recorded, using a different, commercially available polyacrylate flocculant having a number average molecular weight of about 10 -15 million (identified as C).

**Table III**

| **Example** | **ADD. #1** | **ADD. #2** | **g/MT#1** | **g/MT#2** | **Settling (ft/hr)** | **Clarity (mg/l)** | **SV (ml)** |
|---|---|---|---|---|---|---|---|
| 27 | C | A | 121 | 413 | 14 | 190 | 310 |
| 28 | C | A | 194 | 413 | 21 | 215 | 300 |
| 29 | C | A | 243 | 413 | 49 | 176 | 230 |
| 30C | A | C | 413 | 121 | 5 | 146 | 440 |
| 31C | A | C | 413 | 194 | 7 | 157 | 400 |
| 32C | A | C | 413 | 243 | 8 | 194 | 390 |

These data show that the addition sequence of anionic flocculant and water-soluble, hydroxamated polymer in accordance with the present invention results in superior settling and clarity.

### Example 33

Following the procedure of Example 6 except that the water-soluble, hydroxamated polymer has an hydroxamation of 20%, similar results are achieved.

### Example 34

The procedure of Example 6 is again followed except that the water-soluble, hydroxamated polymer has an hydroxamation of 25%. Similar results are again achieved.

### EXAMPLE 35

The procedure of Example 6 is again followed except that the anionic flocculant is a 90/10 sodium acrylate/acrylamide copolymer. Similar results are achieved as shown in Table I.

### EXAMPLE 36

Again following the procedure of Example 6 except that the anionic flocculant is a homopolymer of sodium acrylate, similar results to those shown in Table I are observed.

### EXAMPLES 37-55

When the individual conditions of Examples 1-19 are again followed, using the same hydroxamated polymer, anionic flocculant and other additives specified in Table I, except that a commercial feed to the first stage of the washer train from a Bayer Process alumina plant is used as the charge medium, similar results are achieved i.e. the results of Examples 37-46 show an overall improved Settling Rate and Turbidity as compared to comparative Examples 47-55.

### EXAMPLES 56-59

Replacement of the hydroxamated polymer or anionic flocculant of Example 42 individually with those of Examples 33-36 results in similar unexpectedly superior settling and turbidity.

## Claims

1. A process for improving the settling rate and/or clarity of feeds to the settler and/or the initial stages of the washer train in the Bayer Process, which process comprises (1) admixing therewith, in sequential order, first an anionic flocculant and then a water-soluble polymer containing pendant hydroxamic acid or salt groups, and (2) removing the resultant settled suspended solids.

2. A process according to Claim 1, wherein the anionic flocculant is added to the settler feed line.

3. A process according to Claim 1 or 2, wherein said water-soluble polymer is added to the feed well of the settler.

4. A process according to any one of the preceding claims, wherein said water-soluble polymer is derived from a polymer containing pendant ester, amide, anhydride or nitrile groups.

5. A process according to any one of the preceding claims, wherein the degree of hydroxamation of said water-soluble polymer ranges from 1 to 100 mole percent.

6. A process according to any one of the preceding claims, wherein said anionic flocculant is an acrylate polymer.

7. A process according to Claim 6 when appendant to Claim 4, wherein said acrylate polymer is a polymer of an acrylic acid, and wherein said water-soluble polymer is a polymer of acrylamide.

8. A process according to any one of Claims 1 or 4-7, wherein the anionic flocculant and water-soluble polymer containing pendant hydroxamic acid or salt groups are added to at least one of the feeds to the initial stages of the washer train.

## Patentansprüche

1. Verfahren zur Verbesserung der Absetzgeschwindigkeit und/oder Klarheit der Zuführungen zu dem Absetzer und/oder den Anfangsstufen des Wäscherzuges im Bayer-Verfahren, wobei das Verfahren folgendes umfaßt: (1) Vermischen hiermit, in aufeinanderfolgender Reihenfolge, zunächst eines anionischen Flockungsmittels und dann eines wasserlöslichen Polymers mit daran hängenden Hydroxamsäure- oder Hydroxamsäuresalzgruppen, und (2) Entfernen der resultierenden abgesetzten suspendierten Feststoffe.

2. Verfahren gemäß Anspruch 1, bei dem das anionische Flockungsmittel der Absetzerzuführungsleitung zugegeben wird.

3. Verfahren gemäß Anspruch 1 oder 2, bei dem das wasserlösliche Polymer dem Zuführungsschacht des Absetzers zugegeben wird.

4. Verfahren gemäß einem der vorhergehenden Ansprüche, bei dem das wasserlösliche Polymer abgeleitet ist von einem Polymer mit daran hängenden Ester-, Amid-, Anhydrid- oder Nitrilgruppen.

5. Verfahren gemäß einem der vorhergehenden Ansprüche, bei dem der Grad der Hydroxamierung des wasserlöslichen Polymers im Bereich von 1 bis 100 Molprozent liegt.

6. Verfahren gemäß einem der vorhergehenden Ansprüche, bei dem das anionische Flockungsmittel ein Acrylatpolymer ist.

7. Verfahren gemäß Anspruch 6 in Verbindung mit Anspruch 4, bei dem das Acrylatpolymer ein Polymer einer Acrylsäure ist, und wobei das wasserlösliche Polymer ein Polymer von Acrylamid ist.

8. Verfahren gemäß einem der Ansprüche 1 oder 4 - 7, bei dem das anionische Flockungsmittel und das wasserlösliche Polymer mit daran hängenden Hydroxamsäure- oder Hydroxamsäuresalzgruppen mindestens einer der Zuführungen zu den Anfangsstufen des Wäscherzuges zugegeben werden.

## Revendications

1. Procédé pour améliorer la vitesse de sédimentation et/ou la limpidité des alimentations dans le décanteur et/ou les étages initiaux du train de laveurs dans le procédé Bayer, ledit procédé comprenant (1) le mélange avec celles-ci, successivement , d'abord d'un floculant anionique puis ensuite d'un polymère hydrosoluble contenant des groupes latéraux du type sel ou acide hydroxamique, et (2) l'élimination des matières solides en suspension sédimentées résultantes.

2. Procédé selon la revendication 1, dans lequel le floculant anionique est ajouté dans la conduite d'alimentation du décanteur.

3. Procédé selon la revendication 1 ou 2, dans lequel ledit polymère hydrosoluble est ajouté dans le puits d'alimentation du décanteur.

4. Procédé selon l'une quelconque des revendications précédentes, dans lequel ledit polymère hydrosoluble dérive d'un polymère contenant des groupes latéraux du type ester, amide, anhydride ou nitrile.

5. Procédé selon l'une quelconque des revendications précédentes, dans lequel le degré d'hydroxamation dudit polymère hydrosoluble est compris entre 1 et 100% en moles.

6. Procédé selon l'une quelconque des revendications précédentes, dans lequel ledit floculant anionique est un polymère d'acrylate.

7. Procédé selon la revendication 6 quand elle est subordonnée à la revendication 4, dans lequel ledit polymère d'acrylate est un polymère d'un acide acrylique, et dans lequel ledit polymère hydrosoluble est un polymère d'acrylamide.

8. Procédé selon l'une quelconque des revendications 1 ou 4 à 7, dans lequel le floculant anionique et le polymère hydrosoluble contenant des groupes latéraux du type sel ou acide hydroxamique sont ajoutés à au moins une des alimentations dans les étages initiaux du train de laveurs.
